(19) **Europäisches Patentamt**
**European Patent Office**
**Office européen des brevets**

(11) **EP 2 841 324 B1**

(12) **EUROPEAN PATENT SPECIFICATION**

(45) Date of publication and mention
of the grant of the patent:
**03.01.2018 Bulletin 2018/01**

(51) Int Cl.:
**B62D 5/00** *(2006.01)* **B62D 6/00** *(2006.01)*
**B62D 15/00** *(2006.01)*

(21) Application number: **13781075.0**

(22) Date of filing: **16.04.2013**

(86) International application number:
**PCT/SE2013/050410**

(87) International publication number:
**WO 2013/162447 (31.10.2013 Gazette 2013/44)**

(54) **CONTROL SYSTEM AND METHOD FOR REDUCING THE EFFECTS OF PLAY DURING STEERING**

STEUERSYSTEM UND VERFAHREN ZUR VERMINDERUNG DER AUSWIRKUNGEN DES LENKSPIELS

PROCÉDÉ ET SYSTÈME DE COMMANDE DESTINÉS À LA RÉDUCTION DES EFFETS DU JEU PENDANT LA DIRECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2012 SE 1250406**

(43) Date of publication of application:
**04.03.2015 Bulletin 2015/10**

(73) Proprietor: **Scania CV AB**
**151 87 Södertälje (SE)**

(72) Inventor: **ROTHHÄMEL, Malte**
**S-141 42 Huddinge (SE)**

(74) Representative: **Scania CV AB**
**Patents, GP 117kv**
**151 87 Södertälje (SE)**

(56) References cited:
**EP-A1- 1 521 701      EP-A1- 1 741 615**
**EP-A2- 1 380 490      WO-A1-2011/035960**
**US-A- 4 768 603       US-A- 5 606 502**
**US-A- 5 925 083       US-A1- 2006 006 020**
**US-A1- 2009 026 003   US-A1- 2010 280 716**
**US-A1- 2010 332 081**

**Description**

Field of the invention

The present invention relates to a control system and method for improving drivers' steering sensation according to the preambles of the independent claims.

Background to the invention

When steering a vehicle it is usual that the driver turns the steering wheel by applying to it a force such that the steering wheel turns to a desired angle which corresponds to the direction in which he/she wishes the vehicle to travel. In a vehicle with a system with a direct connection between the steering wheel and the roadwheels, or alternatively with a system whereby the steering is effected via a power servo, the force required to turn the steering wheel corresponds to a given angular friction in the steering, a given setting of roadwheel angles and the friction and state of the road. In the same way, unevennesses of the carriageway and deficiencies in the steering, e.g. play, will cause variation in the force which has to be applied to the steering wheel.

Various investigations have shown that the relationship between the driver's steeringwheel angle input signal and the vehicle's response, e.g. lateral acceleration or yaw rate, is crucial for steering sensation. A truck needs to be easy to drive over long distances, with no feeling of nervousness in the steering. "Nervousness in the steering" means that the ratio between a given steeringwheel angle and the resulting turning of the steering wheel is too linear. A certain delay or resistance is desirable, otherwise the vehicle will react to the slightest movement of the steering wheel. At the same time, the driver needs to experience a clear response from the vehicle to his/her steering action. When there is play in the steering line, e.g. because of wear of mechanical components, elasticity in the control system or non-linear behaviour of tyres, it may happen that the driver has to turn the steering wheel through a certain angle before the vehicle responds.

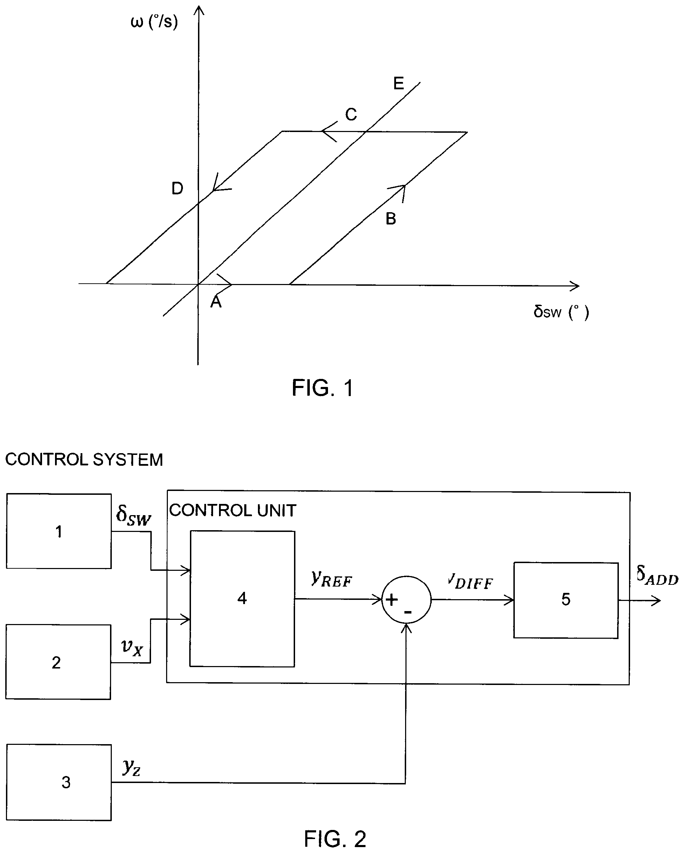

The problem is illustrated in the diagram in Fig. 1 of the relationship between the steeringwheel angle $\delta_{SW}$ and the vehicle's yaw rate $\omega$ when there is play in the steering line. When the driver turns the steering wheel from the initial position 0 to a steeringwheel angle, a certain steeringwheel angle has to be reached before the vehicle responds by turning the roadwheels, as illustrated in the diagram by the vehicle's yaw rate initially not increasing when the steeringwheel angle increases (A). After a little while, the play ceases and the vehicle begins to change direction progressively as the steeringwheel angle increases (B). When the driver needs to turn the vehicle in the opposite direction, the same problem arises, but doubly so. Initially the play described in (A) occurs, followed by another play during the turn in the opposite direction (C). After a little while, the play ceases and the vehicle begins to change direction progressively as the steeringwheel angle increases (D).

An optimum pattern of the response to a given steeringwheel angle is represented by the straight line E in the diagram. EP 1741615 A1 discloses the preamble of claim 1. US 2006/0006020 describes a control system for a vehicle with power-assisted steering. The control system is configured to control a steering mechanism in such a way that the so-called steering angle ratio increases in a central steering range where the steering angle is small, and decreases in a steering range where the steering angle is close to its maximum. Power assistance losses caused by tracking delay from the steering mechanism are thus prevented. When the steering angle increases, the angle rate applied therefore decreases progressively, giving the driver good steering sensation.

WO 2011/035960 describes a method in which the steeringwheel angle is determined and a steering angle addition which depends on a vehicle-specific parameter is applied.

US 20100280716 describes a method for active steering in which the relationship between steeringwheel angle and steering angle may be altered by angle superimposition. An offset between a motor angle demanded and the current motor angle may be reduced by an algorithm which makes the transition gentle.

US 20100332081 describes an active steering system with angle superimposition whereby the relationship between steeringwheel angle and steering angle is varied as a function of the vehicle speed with respect to time delay.

US 20090026003 describes an active steering system in which steering angle additions are made depending on vehicle speed and steeringwheel angle rate.

The systems described above refer to various ways of helping the driver to steer the vehicle.

The object of the present invention is to propose an improved system and an improved method for causing the driver to have good steering sensation when steering the vehicle.

Summary of the invention

The above object is achieved by a control system for reducing the effects of play during steering of a vehicle, which system comprises a steeringwheel angle detector adapted to determining the vehicle's steeringwheel angle $\delta_{SW}(t)$

and generating on the basis thereof a steeringwheel angle signal, a speed detector adapted to determining the vehicle's speed $v_x(t)$ and generating on the basis thereof a speed signal, and a detector adapted to determining the vehicle's actual change of direction $y_z(t)$ and generating on the basis thereof a turning signal. The control system further comprises a control unit adapted to receiving said signals, to using said steeringwheel angle $\delta_{SW}(t)$, vehicle speed $v_x(t)$ and actual change of direction $y_z(t)$ as a basis for calculating a steering angle addition $\delta_{ADD}(t)$ for reducing the discrepancy between an expected change of direction of the vehicle's steered roadwheels and their actual change of direction at said steeringwheel angle $\delta_{SW}(t)$, and to generating on the basis thereof a steering angle addition signal, whereupon the control system is adapted to adding the steering angle addition $\delta_{ADD}(t)$ to the vehicle's manually operated steering mechanism.

In another aspect, the object is achieved by a method for reducing the effects of play during steering of a vehicle, which method comprises determining the vehicle's steeringwheel angle $\delta_{SW}(t)$, determining the vehicle's speed $v_x(t)$, determining the vehicle's actual change of direction $y_z(t)$, using said steeringwheel angle $\delta_{SW}(t)$, speed $v_x(t)$ and actual change of direction as a basis for calculating a steering angle addition $\delta_{ADD}(t)$ for reducing the discrepancy between an expected change of direction of the vehicle's steered roadwheels and their actual change of direction at said steeringwheel angle $\delta_{SW}(t)$, and adding the steering angle addition $\delta_{ADD}(t)$ to the vehicle's manually operated steering mechanism.

The invention achieves a strengthening of the vehicle's response to steering wheel movement, thereby substantially eliminating the effects of the play which may be present in the vehicle's steering line because of mechanical play, roadwheels etc. The delay in the vehicle's response to the driver's given steeringwheel angle is thus reduced.

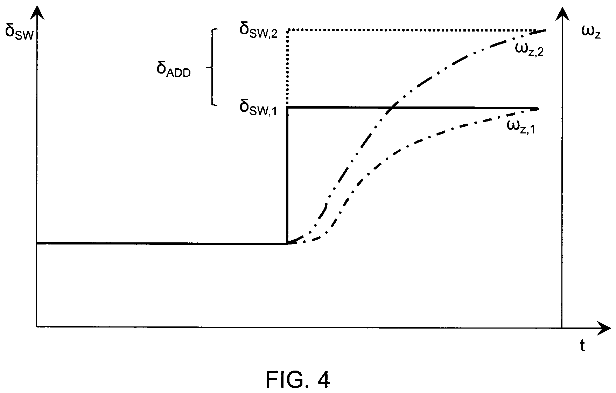

A certain hysteresis in the steering line is usually desirable, otherwise the steering might display nervous behaviour. The effects of the invention are illustrated in an example in the diagram in Fig. 4, as explained in the detailed description set out below.

Preferred embodiments are described in the dependent claims and the detailed description.

Brief description of the attached drawings

The invention is described below with reference to the attached drawings, in which:

Figure 1 is a diagram illustrating the discrepancy in the form of hysteresis which occurs during steering because of play in the steering line.
Figure 2 depicts the control system according to an embodiment of the invention.
Figure 3 shows how the system according to the invention is connected into the vehicle via an electric motor (EM).
Figure 4 is a diagram illustrating the effects of the invention.
Figure 5 is a flowchart for the method according to an embodiment of the invention.

Detailed description of preferred embodiments of the invention

Figure 2 depicts the control system according to an embodiment of the invention, which will now be explained with reference thereto. The control system comprises a steeringwheel angle detector 1 adapted to determining the vehicle's steeringwheel angle $\delta_{SW}(t)$ and to generating on the basis thereof a steeringwheel angle signal. The steeringwheel angle detector may for example be a detector in the vehicle's steering column to measure the turning of the steering wheel. The system comprises also a speed detector 2 adapted to determining the vehicle's speed $v_x(t)$ and to generating on the basis thereof a speed signal. The various different ways of measuring vehicle speed generally involve determining the speed of some movable component of the vehicle which rotates at a rate related to the vehicle's speed. The speed detector may for example be adapted to measuring the rotation speed of the vehicle's roadwheels and thereby determining the vehicle's speed. The control system further comprises a detector 3 adapted to determining the vehicle's actual change of direction and generating on the basis thereof a turning signal. The vehicle's actual change of direction is that which takes place when the driver steers the vehicle. The detector 3 may for example be a yaw rate detector adapted to determining the vehicle's yaw rate $\omega_z(t)$ and to generating on the basis thereof a yaw rate signal. The yaw rate describes how quickly the vehicle turns about its own centre of gravity, which takes place when the vehicle changes its direction of movement. In another embodiment, the detector 3 may be adapted to determining the vehicle's lateral acceleration $a_y(t)$ in order to determine the vehicle's actual change of direction. Lateral acceleration describes the forces required for keeping the vehicle on the carriageway and may for example be determined by using an acceleration detector adapted to determining lateral acceleration.

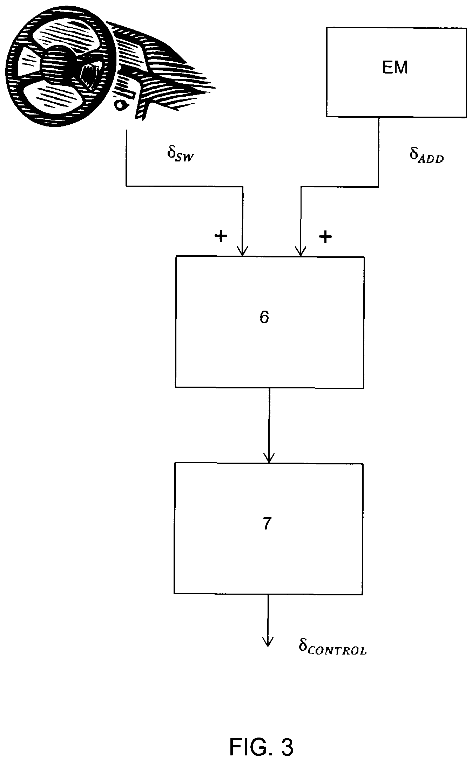

Steeringwheel angle signals, speed signals and a turning signal which describes the vehicle's actual change of direction are then sent to a control unit in the control system. The control unit is adapted to receiving said signals and to calculating a steering angle addition $\delta_{ADD}(t)$ for reducing the discrepancy between an expected change of direction of the vehicle's steered roadwheels and their actual change of direction at said steeringwheel angle $\delta_{SW}(t)$. The calculations are based on said steeringwheel angle $\delta_{SW}(t)$, vehicle speed $v_x(t)$ and actual change of direction $y_z(t)$. The control unit is further adapted to generating on the basis thereof a steering angle addition signal, whereupon the control system is adapted to adding the steering angle addition $\delta_{ADD}(t)$ to the vehicle's manually operated steering mechanism 6, as illustrated in Figure 3.

The expected change of direction is that which the vehicle would optimally execute at the respective steeringwheel angle if there was no play in the steering line, tyres etc.

In this way, play in the steering line may be compensated for without requiring the driver to learn exactly how the particular vehicle behaves and to adapt accordingly. The steering thus becomes safer and more predictable. With the invention, the vehicle's actual change of direction will therefore correspond better to the driver's steeringwheel angle input signal. The vehicle's response time is thus reduced.

In one embodiment the control unit is adapted to calculating a difference $y_{DIFF}(t)$ between the vehicle's expected change of direction $y_{REF}(t)$ and its actual change of direction $y_z(t)$ and to generating on the basis thereof a difference signal. In this way the discrepancy between the vehicle's expected change of direction and actual change of direction may be arrived at. This discrepancy may then be compensated for by the control system being adapted to determining the steering angle addition $\delta_{ADD}(t)$ on the basis of said difference $y_{DIFF}(t)$. The vehicle's expected change of direction $y_{REF}(t)$ is preferably determined by means of a model 4 of the vehicle's expected change of direction at said steeringwheel angle $\delta_{SW}(t)$ and vehicle speed $v_x(t)$. Using a model of how the vehicle would react to steeringwheel angles if there was no play in the steering line makes it possible to find out how great the discrepancy is and to compensate for it.

As explained previously, the vehicle's actual change of direction may for example be described by its yaw rate $\omega_z(t)$ or its lateral acceleration $a_y(t)$.

When it is desirable to regulate the vehicle on the basis of its yaw rate, its actual change of direction $y_z(t)$ is then determined by its yaw rate $\omega_z(t)$. The vehicle's actual change of direction $y_{REF}(t)$ is determined in this embodiment by means of a model 4 of its expected yaw rate $\omega_{REF}(t)$ from

$$\frac{v_x(t) \cdot \delta(t)}{L + K_{us} \cdot v_x^2(t)} \qquad (1a)$$

in which $v_x(t)$ is the vehicle's speed, the steering angle $\delta(t) = \frac{\delta_{SW}(t)}{i}$ in which $i$ is the vehicle's gear ratio, $L$ is the vehicle's wheelbase (axle spacing) and $K_{us}$ the vehicle's understeer gradient. The discrepancy which occurs between expected yaw rate and actual yaw rate may thus be compensated for.

When it is desirable to regulate the vehicle on the basis of its lateral acceleration, its actual change of direction $y_z(t)$ is then determined by its lateral acceleration $a_y(t)$. The vehicle's expected change of direction $y_{REF}(t)$ is determined in this embodiment by means of a model 4 of the vehicle's expected lateral acceleration $a_y(t)$ from

$$\frac{\delta(t) \cdot v_x^2(t)}{L + K_{us} \cdot v_x^2(t)} \qquad (1b)$$

The discrepancy which occurs between expected lateral acceleration and actual lateral acceleration may thus be compensated for.

The control system then comprises in one embodiment a regulator 5 adapted to receiving said difference signal and to converting said difference $y_{DIFF}(t)$ to a steering angle addition $\delta_{ADD}(t)$. This makes it possible to determine the magnitude of the steeringwheel angle $\delta_{ADD}$ which has to be added to the current steeringwheel angle $\delta_{SW}(t)$, and to achieve regulation of the yaw rate and the lateral acceleration respectively. The regulator may for example be a P, PI or PID regulator. Using a regulator makes it possible to effect a "gentle" addition of added turning angle $\delta_{ADD}$. The regulator characteristic may with advantage be adapted to, for example, the driver or the driving situation. In urban traffic a quicker response may for example be desirable, since the pace of movement is usually faster than on national highways.

Figure 3 shows how the calculated steering angle addition $\delta_{ADD}$ is added to the steering angle $\delta_{SW}$ applied by the driver by turning the steering wheel. The steering angle addition $\delta_{ADD}$ may for example be generated by using an electric motor (EM). The two steering angles are conveyed as input signals to the vehicle's manually operated steering mechanism, which may comprise a harmonic drive 6, planetary gearbox 6, which then causes the servo 7 to convey desired angles $\delta_{CONTROL}$ to the roadwheels. The vehicle's manually operated steering mechanism may in one embodiment comprise "steer by wire" whereby the vehicle is steered by an electronic control system.

Figure 4 illustrates the effects of the invention, here in a diagram in which the driver's current steeringwheel angle $\delta_{SW}(t)$ and the vehicle's yaw rate $\omega_z(t)$ are superimposed. $\delta_{SW,1}(t)$ denotes the driver's steeringwheel angle, and the vehicle's resulting yaw rate $\omega_{z,1}(t)$ without compensation. The vehicle therefore only begins to turn after a certain period of time, i.e. with a certain delay. When a steering angle addition $\delta_{ADD}$ is added to the current steeringwheel angle $\delta_{SW,1}(t)$ the resulting steeringwheel angle $\delta_{SW,2}(t)$ becomes greater. The vehicle is then forced to turn more quickly, with the resulting increased yaw rate $\omega_{z,2}(t)$. The invention thus causes a momentary increase in the steering angle which is conveyed as an input signal to the vehicle's manually operated steering mechanism, as illustrated in Figure 3. The resulting yaw rate $\omega_z(t)$ is then determined and is fed back in the control system as illustrated in Figure 2. The effects of the invention are here illustrated when the regulating parameter used is the yaw rate $\omega_z(t)$, but the same or at least similar effects are achieved by choosing to regulate the vehicle with respect to lateral acceleration $a_y(t)$.

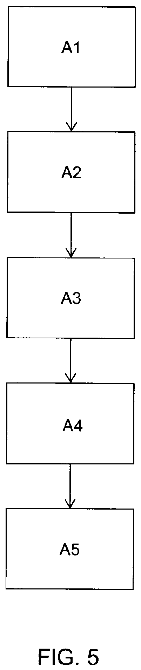

In another aspect, the invention comprises a method for reducing the effects of play during steering of a vehicle. The method is illustrated in the flowchart in Figure 5 which initially comprises a step A1 determining the vehicle's steeringwheel angle $\delta_{SW}(t)$, a step A2 determining the vehicle's speed $v_x(t)$ and a step A3 determining the vehicle's actual change of direction $y_z(t)$. These first three steps A1-A3 may take place in a different order. When they have been performed, step A4 then uses said steeringwheel angle $\delta_{SW}(t)$, speed $v_x(t)$ and actual change of direction as a basis for calculating a steering angle addition $\delta_{ADD}(t)$ for reducing the discrepancy between an expected change of direction of the vehicle's steered roadwheels and their actual change of direction at said steeringwheel angle $\delta_{SW}(t)$. Step A5 then adds the steering angle addition $\delta_{ADD}(t)$ to the vehicle's manually operated steering mechanism.

As previously described in relation to the control system, there are various alternatives for determining the magnitudes indicated above, which alternatives are hereby referred to for conducting the method.

In one embodiment the method comprises determining said steering angle addition $\delta_{ADD}(t)$ on the basis of a difference $y_{DIFF}(t)$ which is calculated as the difference between the vehicle's expected change of direction $y_{REF}(t)$ and its actual change of direction $y_z(t)$. The vehicle's expected change of direction $y_{REF}(t)$ is then preferably determined by means of a model 4 of its expected change of direction $y_{REF}(t)$ at said steeringwheel angle $\delta_{SW}(t)$ and vehicle speed $v_x(t)$.

In cases where the vehicle is regulated with respect to its yaw rate $\omega_z(t)$, the method comprises determining the vehicle's actual change of direction $y_z(t)$ by determining its yaw rate $\omega_z(t)$, and using a model 4 of its expected yaw rate $\omega_{REF}(t)$ to determine its expected change of direction.

In cases where the vehicle is regulated with respect to its lateral acceleration $a_y(t)$, the method comprises determining the vehicle's actual change of direction $y_z(t)$ by determining its lateral acceleration $a_y(t)$, and using a model 4 of its expected lateral acceleration $a_y(t)$ to determine its expected change of direction.

The method may also comprise the step of converting said difference $y_{DIFF}(t)$ to a steering angle addition $\delta_{ADD}(t)$.

The invention comprises also a computer programme product comprising computer programme instructions for enabling a computer system to perform steps according to the above method when the programme instructions are run on said computer system. In one embodiment said computer programme product has the programme instructions stored on a medium which is readable by a computer system.

The present invention is not restricted to the embodiments described above. Sundry alternatives, modifications and equivalents may be used. The aforesaid embodiments therefore do not limit the invention's scope which is defined by the attached claims.

**Claims**

1. A control system for reducing the effects of play during steering of a vehicle, which system comprises

- a steeringwheel angle detector (1) adapted to determining the vehicle's steeringwheel angle $\delta_{SW}(t)$ and to generating on the basis thereof a steeringwheel angle signal,
- a speed detector (2) adapted to determining the vehicle's speed $v_x(t)$ and to generating on the basis thereof a speed signal,

**characterised in that** the control system comprises

- a detector (3) adapted to determining the vehicle's actual change of direction $y_z(t)$ and to generating on the basis thereof a turning signal;

the control system further comprises a control unit adapted to

- receiving said signals and
- using said steeringwheel angle $\delta_{SW}(t)$, speed $v_x(t)$ and actual change of direction $y_z(t)$ as a basis for calculating a steering angle addition $\delta_{ADD}(t)$ for reducing the discrepancy between an expected change of direction of the vehicle's steered roadwheels and their actual change of direction at said steeringwheel angle $\delta_{SW}(t)$, and generating on the basis thereof a steering angle addition signal, whereupon the control system is adapted to adding the steering angle addition $\delta_{ADD}(t)$ to the vehicle's manually operated steering system (6).

2. A control system according to claim 1, in which the control unit is adapted to calculating a difference $y_{DIFF}(t)$ between the vehicle's expected change of direction $y_{REF}(t)$ and its actual change of direction $y_z(t)$ and to generating on the basis thereof a difference signal, $y_{REF}(t)$ being determined by means of a model (4) of the vehicle's expected change of direction at said steeringwheel angle $\delta_{SW}(t)$ and vehicle speed $v_x(t)$, whereupon the control system is adapted to determining said steering angle addition $\delta_{ADD}(t)$ on the basis of said difference $y_{DIFF}(t)$.

3. A control system according to claim 2, in which the vehicle's actual change of direction $y_z(t)$ is determined by its yaw rate $\omega_z(t)$, and the vehicle's expected change of direction $y_{REF}(t)$ is determined by means of a model (4) of the vehicle's expected yaw rate $\omega_{REF}(t)$ from

$$\frac{v_x(t) \cdot \delta(t)}{L + K_{us} \cdot v_x^2(t)} \qquad (1a)$$

in which $v_x(t)$ is the vehicle's speed, $\delta(t) = \frac{\delta_{sw}(t)}{i}$ in which $i$ is the vehicle's gear ratio, $L$ is the vehicle's wheelbase and $K_{us}$ the vehicle's understeer gradient.

4. A control system according to claim 2, in which the vehicle's actual change of direction $y_z(t)$ is determined by its lateral acceleration $a_y(t)$, and the vehicle's expected change of direction $y_{REF}(t)$ is determined by means of a model (4) of the vehicle's expected lateral acceleration $a_y(t)$ from

$$\frac{\delta(t) \cdot v_x^2(t)}{L + K_{us} \cdot v_x^2(t)} \qquad (1b)$$

in which $v_x(t)$ is the vehicle's speed, $\delta(t) = \frac{\delta_{sw}(t)}{i}$ in which $i$ is the vehicle's gear ratio, $L$ is the vehicle's wheelbase and $K_{us}$ the vehicle's understeer gradient.

5. A control system according to any one of claims 2 to 4, in which the control unit comprises a regulator (5) adapted to receiving said difference signal and converting said difference $y_{DIFF}(t)$ to a steering angle addition $\delta_{ADD}(t)$.

6. A control system according to claim 5, in which the regulator (5) is a P, PI or PID regulator.

7. A method for reducing the effects of play during steering of a vehicle, comprising

- determining the vehicle's steeringwheel angle $\delta_{SW}(t)$,
- determining the vehicle's speed $v_x(t)$,

**characterised in that** the method comprises

- determining the vehicle's actual change of direction $y_z(t)$,
- using said steeringwheel angle $\delta_{SW}(t)$, speed $v_x(t)$ and actual change of direction $y_z(t)$ as a basis for calculating a steering angle addition $\delta_{ADD}(t)$ for reducing the discrepancy between an expected change of direction of the vehicle's steered roadwheels and their actual change of direction at said steeringwheel angle $\delta_{SW}(t)$, and
- adding the steering angle addition $\delta_{ADD}(t)$ to the vehicle's manually operated steering mechanism (6).

8. A method according to claim 7, comprising

- calculating a difference $y_{DIFF}(t)$ between the vehicle's expected change of direction $y_{REF}(t)$ and its actual change of direction $y_z(t)$, $y_{REF}(t)$ being determined by means of a model (4) of the vehicle's expected change of direction $y_{REF}(t)$ at said steeringwheel angle $\delta_{SW}(t)$ and the vehicle's speed $v_x(t)$;
- determining said steering angle addition $\delta_{ADD}(t)$ on the basis of said difference $y_{DIFF}(t)$.

9. A method according to claim 8, comprising

- determining the vehicle's actual change of direction $y_z$(t) by determining its yaw rate $\omega_z$(t), and
- determining the vehicle's expected change of direction by means of a model (4) of its expected yaw rate $\omega_{REF}$(t) from

$$\frac{v_x(t) \cdot \delta(t)}{L + K_{us} \cdot v_x^2(t)} \qquad (1a)$$

in which $v_x$(t) is the vehicle's speed, $\delta(t) = \frac{\delta_{sw}(t)}{i}$ in which *i* is the vehicle's gear ratio, *L* is the vehicle's wheelbase and $K_{us}$ the vehicle's understeer gradient.

10. A method according to claim 8, comprising

- determining the vehicle's actual change of direction $y_z$(t) by determining its lateral acceleration $a_y$(t), and
- determining the vehicle's expected change of direction by means of a model (4) of its expected lateral acceleration $a_y$(t) from

$$\frac{\delta(t) \cdot v_x^2(t)}{L + K_{us} \cdot v_x^2(t)} \qquad (1b)$$

in which $v_x$(t) is the vehicle's speed, $\delta(t) = \frac{\delta_{sw}(t)}{i}$ in which *i* is the vehicle's gear ratio, *L* is the vehicle's wheelbase and $K_{us}$ the vehicle's understeer gradient.

11. A method according to any one of claims 8 to 10, comprising the step of converting said difference $y_{DIFF}$(t) to a steering angle addition $\delta_{ADD}$(t).

12. A computer programme product comprising computer programme instructions for enabling a computer system to perform steps of the method according to any one of claims 7 to 11 when the programme instructions are run on said computer system.

13. A computer programme product according to claim 12, in which the programme instructions are stored on a medium which is readable by a computer system.

**Patentansprüche**

1. Kontrollsystem zur Verringerung der Auswirkungen eines Spiels während eines Lenkens eines Fahrzeugs, umfassend

- einen Lenkradwinkeldetektor (1), der dazu vorgesehen ist, den Lenkradwinkel ösw(t) des Fahrzeugs zu bestimmen und darauf basierend ein Lenkradwinkelsignal zu erzeugen,
- einen Geschwindigkeitsdetektor (2), der dazu vorgesehen ist, die Geschwindigkeit $v_x$(t) des Fahrzeugs zu bestimmen und darauf basierend ein Geschwindigkeitssignal zu erzeugen,

**dadurch gekennzeichnet, dass das** Kontrollsystem umfasst

- einen Detektor (3), der dazu vorgesehen ist, die tatsächliche Richtungsänderung $y_z$(t) des Fahrzeugs zu bestimmen und darauf basierend ein Richtungsänderungssignal zu erzeugen;

und dass das Kontrollsystem ferner eine Steuereinheit umfasst, die dazu eingerichtet ist

- die genannten Signale zu empfangen und

- den Lenkradwinkel $\delta_{SW}(t)$, die Geschwindigkeit $v_x(t)$ und die tatsächliche Richtungsänderung $y_z(t)$ als Grundlage zur Berechnung eines Lenkwinkelaufschlags $\delta_{ADD}(t)$ zur Verringerung einer Abweichung zwischen einer erwarteten Richtungsänderung der gelenkten Räder des Fahrzeugs und deren tatsächlicher Richtungsänderung bei dem Lenkradwinkel $\delta_{SW}(t)$ zu verwenden und darauf basierend ein Lenkwinkelaufschlagsignal zu erzeugen, wobei das Kontrollsystem dazu eingerichtet ist, den Lenkwinkelaufschlag $\delta_{ADD}(t)$ dem manuell betätigbaren Lenksystem (6) des Fahrzeugs aufzuschlagen.

2. Kontrollsystem nach Anspruch 1, bei welchem die Steuereinheit dazu eingerichtet ist, eine Differenz $y_{DIFF}(t)$ zwischen der erwarteten Richtungsänderung $y_{REF}(t)$ des Fahrzeugs und dessen tatsächlicher Richtungsänderung $y_z(t)$ zu berechnen und darauf basierend ein Differenzsignal zu erzeugen, wobei $y_{REF}(t)$ mittels eines Modells (4) der erwarteten Richtungsänderung des Fahrzeugs bei dem Lenkradwinkel $\delta_{SW}(t)$ und der Fahrzeuggeschwindigkeit $v_x(t)$ bestimmt wird, wobei das Kontrollsystem dazu eingerichtet ist, den Lenkwinkelaufschlag $\delta_{ADD}(t)$ auf der Grundlage der Differenz $y_{DIFF}(t)$ zu bestimmen.

3. Kontrollsystem nach Anspruch 2, bei welchem die tatsächliche Richtungsänderung $y_z(t)$ des Fahrzeugs anhand dessen Giergeschwindigkeit $\omega_z(t)$ bestimmt wird und bei welchen die erwartete Richtungsänderung $y_{REF}(t)$ des Fahrzeugs mittels eines Modells (4) der erwarteten Giergeschwindigkeit $\omega_{REF}(t)$ des Fahrzeugs aus

$$\frac{v_x(t) \cdot \delta(t)}{L + K_{us} \cdot v_x^2(t)} \qquad (1a)$$

bestimmt wird, wobei $v_x(t)$ die Geschwindigkeit des Fahrzeugs ist, $\delta(t)=\delta_{SW}(t)/i$, wobei i das Übersetzungsverhältnis des Fahrzeugs ist, L der Radstand des Fahrzeugs ist und $K_{us}$ der Untersteuer-Gradient des Fahrzeugs ist.

4. Kontrollsystem nach Anspruch 2, bei welchem die tatsächliche Richtungsänderung $y_z(t)$ des Fahrzeugs anhand dessen Querbeschleunigung $a_y(t)$ bestimmt wird und bei welchem die erwartete Richtungsänderung $y_{REF}(t)$ des Fahrzeugs mittels eines Modells (4) der erwarteten Querbeschleunigung $a_y(t)$ des Fahrzeugs aus

$$\frac{\delta(t) \cdot v_x^2(t)}{L + K_{us} \cdot v_x^2(t)} \qquad (1b)$$

bestimmt wird, wobei $v_x(t)$ die Geschwindigkeit des Fahrzeugs ist, $\delta(t)=\delta_{SW}(t)/i$, wobei i das Übersetzungsverhältnis des Fahrzeugs ist, L der Radstand des Fahrzeugs ist und $K_{us}$ der Untersteuer-Gradient des Fahrzeugs ist.

5. Kontrollsystem nach einem der Ansprüche 2 bis 4, bei welchem die Steuereinheit einen Regler (5) aufweist, der dazu eingerichtet ist, das Differenzsignal zu empfangen und die Differenz $y_{DIFF}(t)$ in einen Lenkwinkelaufschlag $\delta_{ADD}(t)$ umzuwandeln.

6. Kontrollsystem nach Anspruch 5, in welchem der Regler (5) ein P-Regler, ein PI-Regler oder ein PI D-Regler ist.

7. Verfahren zur Verringerung der Auswirkungen eines Spiels während eines Lenkens eines Fahrzeugs, umfassend

   - Bestimmen des Lenkradwinkels $\delta_{SW}(t)$ des Fahrzeugs,
   - Bestimmen einer Geschwindigkeit $v_x(t)$ des Fahrzeugs,

   **dadurch gekennzeichnet, dass** das Verfahren umfasst

   - Bestimmen der tatsächlichen Richtungsänderung $y_z(t)$ des Fahrzeugs,
   - Verwenden des Lenkradwinkels $\delta_{SW}(t)$, der Geschwindigkeit $v_x(t)$ und der tatsächlichen Richtungsänderung $y_z(t)$ als Grundlage zur Berechnung eines Lenkwinkelaufschlags $\delta_{ADD}(t)$ zur Verringerung einer Abweichung zwischen einer erwarteten Richtungsänderung der gelenkten Räder des Fahrzeugs und deren tatsächlicher Richtungsänderung bei dem Lenkradwinkel $\delta_{SW}(t)$ und
   - Aufschlagen des Lenkwinkelaufschlags $\delta_{ADD}(t)$ auf den manuell betätigbaren Lenkmechanismus (6) des Fahrzeugs.

**8.** Verfahren nach Anspruch 7, umfassend

- Berechnen einer Differenz $y_{DIFF}(t)$ zwischen der erwarteten Richtungsänderung $y_{REF}(t)$ des Fahrzeugs und dessen tatsächlicher Richtungsänderung $y_z(t)$, wobei $y_{REF}(t)$ mittels eines Modells (4) der erwarteten Richtungsänderung des Fahrzeugs bei dem Lenkradwinkel $\delta_{SW}(t)$ und der Fahrzeuggeschwindigkeit $v_x(t)$ bestimmt wird;
- Bestimmen des Lenkwinkelaufschlags $\delta_{ADD}(t)$ auf der Grundlage der Differenz $y_{DIFF}(t)$.

**9.** Verfahren nach Anspruch 8, umfassend

- Bestimmen der tatsächlichen Richtungsänderung $y_z(t)$ des Fahrzeugs anhand dessen Giergeschwindigkeit $\omega_z(t)$ und
- Bestimmen der erwarteten Richtungsänderung $y_{REF}(t)$ des Fahrzeugs mittels eines Modells (4) der erwarteten Giergeschwindigkeit $\omega_{REF}(t)$ des Fahrzeugs aus

$$\frac{v_x(t) \cdot \delta(t)}{L + K_{us} \cdot v_x^2(t)} \qquad (1a)$$

wobei $v_x(t)$ die Geschwindigkeit des Fahrzeugs ist, $\delta(t) = \delta_{SW}(t)/i$, wobei $i$ das Übersetzungsverhältnis des Fahrzeugs ist, $L$ der Radstand des Fahrzeugs ist und $K_{us}$ der Untersteuer-Gradient des Fahrzeugs ist.

**10.** Verfahren nach Anspruch 8, umfassend

- Bestimmen der tatsächlichen Richtungsänderung $y_z(t)$ des Fahrzeugs anhand dessen Querbeschleunigung $a_y(t)$ und
- Bestimmen der erwarteten Richtungsänderung $y_{REF}(t)$ des Fahrzeugs mittels eines Modells (4) der erwarteten Querbeschleunigung $a_y(t)$ des Fahrzeugs aus

$$\frac{\delta(t) \cdot v_x^2(t)}{L + K_{us} \cdot v_x^2(t)} \qquad (1b)$$

wobei $v_x(t)$ die Geschwindigkeit des Fahrzeugs ist, $\delta(t) = \delta_{SW}(t)/i$, wobei $i$ das Übersetzungsverhältnis des Fahrzeugs ist, $L$ der Radstand des Fahrzeugs ist und $K_{us}$ der Untersteuer-Gradient des Fahrzeugs ist.

**11.** Verfahren nach einem der Ansprüche 8 bis 10, umfassend den Schritt eines Umwandelns der Differenz $y_{DIFF}(t)$ in einen Lenkwinkelaufschlag $\delta_{ADD}(t)$.

**12.** Computerprogrammprodukt umfassend eine Computerprogrammanweisungen zur Befähigung eines Computersystems zur Durchführung von Schritten des Verfahrens nach einem der Ansprüche 7 bis 11 wenn die Computerprogrammanweisungen auf dem Computersystem ausgeführt werden.

**13.** Computerprogrammprodukt nach Anspruch 12, bei welchem die Programmanweisungen auf einem Medium gespeichert sind, das von einem Computersystem lesbar ist.

**Revendications**

**1.** Système de commande pour réduire les effets d'un jeu lors du pilotage de la direction d'un véhicule, ce système comprenant :

- un détecteur d'angle de volant de direction (1) adapté de façon à déterminer l'angle de volant de direction $\delta_{SW}(t)$ du véhicule et à générer en fonction de celui-ci un signal d'angle de volant de direction,
- un détecteur de vitesse (2) adapté de façon à déterminer la vitesse $v_x(t)$ du véhicule et à générer en fonction de celle-ci un signal de vitesse, **caractérisé en ce que** le système de commande comprend :
- un détecteur (3) adapté de façon à déterminer le changement de direction effectif $y_z(t)$ du véhicule et à générer en fonction de celui-ci un signal de virage ;

le système de commande comprenant de plus une unité de commande adaptée de façon à :

- recevoir lesdits signaux, et
- utiliser ledit angle de volant de direction $\delta_{SW}(t)$, ladite vitesse $v_x(t)$ et ledit changement de direction effectif $y_z(t)$ comme base pour calculer un complément d'angle de direction $\delta_{ADD}(t)$ pour réduire l'écart entre un changement de direction prévu des roues routières dirigées du véhicule et leur changement de direction effectif pour ledit angle de volant de direction $\delta_{SW}(t)$, et générer en fonction de celle-ci un signal de complément d'angle de direction, le système de commande étant adapté de façon à ajouter le complément d'angle de direction $\delta_{ADD}(t)$ au système de direction (6) actionné manuellement du véhicule.

2. Système de commande selon la revendication 1, dans lequel l'unité de commande est adaptée de façon à calculer une différence $y_{DIFF}(t)$ entre le changement de direction prévu $y_{REF}(t)$ du véhicule et son changement de direction effectif $y_z(t)$, et à générer en fonction de celle-ci un signal de différence, $y_{REF}(t)$ étant déterminé au moyen d'un modèle (4) du changement de direction prévu du véhicule pour ledit angle de volant de direction $\delta_{SW}(t)$ et ladite vitesse de véhicule $v_x(t)$, le système de commande étant adapté de façon à déterminer ledit complément d'angle de direction $\delta_{ADD}(t)$ en fonction de ladite différence $y_{DIFF}(t)$.

3. Système de commande selon la revendication 2, dans lequel le changement de direction effectif $y_z(t)$ du véhicule est déterminé par son taux de lacet $\omega_z(t)$, et le changement de direction prévu $y_{REF}(t)$ du véhicule est déterminé au moyen d'un modèle (4) du taux de lacet prévu $\omega_{REF}(t)$ du véhicule à partir de :

$$\frac{v_x(t).\delta(t)}{L + K_{us}.v_x^2(t)} \qquad (1a)$$

où $v_x(t)$ est la vitesse du véhicule, $\delta(t) = \dfrac{\delta_{SW}(t)}{i}$ , où i est le rapport de transmission du véhicule, L est l'empattement du véhicule et $K_{us}$ est le gradient de sous-virage du véhicule.

4. Système de commande selon la revendication 2, dans lequel le changement de direction effectif $y_z(t)$ du véhicule est déterminé par son accélération latérale $a_y(t)$, et le changement de direction prévu $y_{REF}(t)$ du véhicule est déterminé au moyen d'un modèle (4) de l'accélération latérale prévue $a_y(t)$ du véhicule à partir de :

$$\frac{\delta(t).v_x^2(t)}{L + K_{us}.v_x^2(t)} \qquad (1b)$$

où $v_x(t)$ est la vitesse du véhicule, $\delta(t) = \dfrac{\delta_{SW}(t)}{i}$ , où i est le rapport de transmission du véhicule, L est l'empattement du véhicule et $K_{us}$ est le gradient de sous-virage du véhicule.

5. Système de commande selon l'une quelconque des revendications 2 à 4, dans lequel l'unité de commande comprend un régulateur (5) adapté de façon à recevoir ledit signal de différence et à convertir ladite différence $y_{DIFF}(t)$ en un complément d'angle de direction $\delta_{ADD}(t)$.

6. Système de commande selon la revendication 5, dans lequel le régulateur (5) est un régulateur P, PI ou PID.

7. Procédé pour réduire les effets d'un jeu lors du pilotage de la direction d'un véhicule, comprenant :

- une détermination de l'angle de volant de direction $\delta_{SW}(t)$ du véhicule,
- une détermination de la vitesse $v_x(t)$ du véhicule,

**caractérisé en ce que** le procédé comprend :

- une détermination du changement de direction effectif $y_z(t)$ du véhicule,

- une utilisation dudit angle de volant de direction $\delta_{SW}(t)$, de ladite vitesse $v_x(t)$ et dudit changement de direction effectif $y_z(t)$ comme base pour calculer un complément d'angle de direction $\delta_{ADD}(t)$ pour réduire l'écart entre un changement de direction prévu des roues routières dirigées du véhicule et leur changement de direction effectif pour ledit angle de volant de direction $\delta_{SW}(t)$, et

- ajouter le complément d'angle de direction $\delta_{ADD}(t)$ au mécanisme de direction actionné manuellement (6) du véhicule.

**8.** Procédé selon la revendication 7, comprenant :

- un calcul d'une différence $y_{DIFF}(t)$ entre le changement de direction prévu $y_{REF}(t)$ du véhicule et son changement de direction effectif $y_z(t)$, $y_{REF}(t)$ étant déterminé au moyen d'un modèle (4) du changement de direction prévu $y_{REF}(t)$ du véhicule pour ledit angle de volant de direction $\delta_{SW}(t)$ et la vitesse $v_x(t)$ du véhicule ;

- la détermination dudit complément d'angle de direction $\delta_{ADD}(t)$ en fonction de ladite différence $y_{DIFF}(t)$.

**9.** Procédé selon la revendication 8, comprenant :

- une détermination du changement de direction effectif $y_z(t)$ du véhicule par la détermination de son taux de lacet $\omega_z(t)$, et

- une détermination du changement de direction prévu du véhicule au moyen d'un modèle (4) de son taux de lacet prévu $\omega_{REF}(t)$ à partir de :

$$\frac{v_x(t).\delta(t)}{L+K_{us}.v_x^2(t)} \tag{1a}$$

où $v_x(t)$ est la vitesse du véhicule, $\delta(t) = \dfrac{\delta_{SW}(t)}{i}$, où $i$ est le rapport de transmission du véhicule, $L$ est l'empattement du véhicule et $K_{us}$ est le gradient de sous-virage du véhicule.

**10.** Procédé selon la revendication 8, comprenant :

- une détermination du changement de direction effectif $y_z(t)$ du véhicule par la détermination de son accélération latérale $a_y(t)$, et

- une détermination du changement de direction prévu du véhicule au moyen d'un modèle (4) de son accélération latérale prévue $a_y(t)$ à partir de :

$$\frac{\delta(t).v_x^2(t)}{L+K_{us}.v_x^2(t)} \tag{1b}$$

où $v_x(t)$ est la vitesse du véhicule, $\delta(t) = \dfrac{\delta_{SW}(t)}{i}$, où $i$ est le rapport de transmission du véhicule, $L$ est l'empattement du véhicule et $K_{us}$ est le gradient de sous-virage du véhicule.

**11.** Procédé selon l'une quelconque des revendications 8 à 10, comprenant l'étape de convertir ladite différence $y_{DIFF}(t)$ en un complément d'angle de direction $\delta_{ADD}(t)$.

**12.** Produit de programme informatique comprenant des instructions de programme informatique pour permettre à un système informatique d'exécuter des étapes du procédé selon l'une quelconque des revendications 7 à 11 lorsque les instructions de programme sont exécutées sur ledit système informatique.

**13.** Produit de programme informatique selon la revendication 12, dans lequel les instructions de programme sont mémorisées sur un support qui est lisible par un système informatique.

FIG. 1

CONTROL SYSTEM

FIG. 2

$\delta_{SW}$

EM

$\delta_{ADD}$

+        +

6

7

$\delta_{CONTROL}$

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1741615 A1
- US 20060006020 A
- WO 2011035960 A
- US 20100280716 A
- US 20100332081 A
- US 20090026003 A